# EUROPEAN PATENT SPECIFICATION

(11) **EP 2 869 170 B1**
(45) Date of publication and mention of the grant of the patent: **04.05.2016**
(21) Application number: 14189161.4
(22) Date of filing: 16.10.2014
(51) Int. Cl.: G06F 3/044

(54) **Operation device and vehicle operation device using the same**
Betriebsvorrichtung und Fahrzeugbetriebsvorrichtung dafür
Dispositif de commande et dispositif de fonctionnement de véhicule l'utilisant

(30) Priority: 31.10.2013 JP 2013226816
(43) Date of publication of application: 06.05.2015
(73) Proprietor: Alps Electric Co., Ltd., Tokyo 145-8501 (JP)
(72) Inventor: Sato, Takashi, Tokyo, Tokyo 145-8501 (JP)
(74) Representative: Klunker . Schmitt-Nilson . Hirsch

(56) References cited:
- DE-A1-102010 047 686

## Description

### BACKGROUND OF THE INVENTION

### 1. Field of the Invention

The present invention relates to an operation device equipped with an operation panel in which characters, patterned designs, or the like indicating operation functions are formed so as to have translucency.

### 2. Description of the Related Art

In order to make it easy to perform input operations on various kinds of electronic devices, various operation devices of a type of illuminating characters, patterned designs, or the like indicating operation functions with a backlight such as a lamp or a light emitting diode (LED) have been proposed. In particular, such operation devices are mounted in instrument panels within vehicles in many cases, make it easy for operators to perform visual recognition day and night, and improve operability during being in vehicles or driving vehicles.

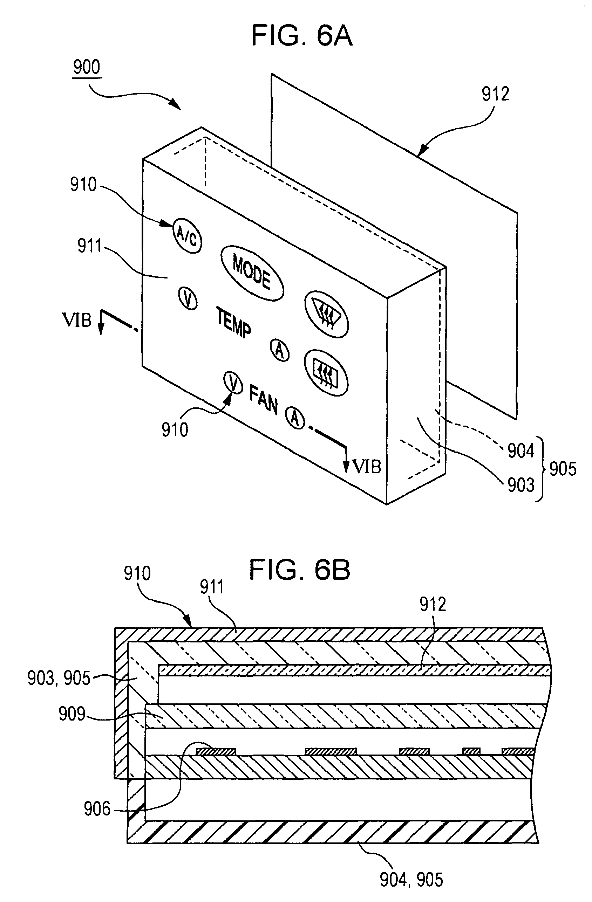

Document DE-A-102010047 relates to an operation device of an electrostatic capacitance type, comprising on a front surface side of an operation panel a plurality of translucent pattern portions to be operated by an operator and on a back surface side of the operation panel a plurality of electrodes arranged at positions not over lapping with the pattern portions, wherein an electrostatic capacitance detection portion determines the presence or absence of an operation performed on a predetermined pattern portion in accordance with a change in electrostatic capacitance of an in put determination electrode arranged close to the predetermined pattern, portion. As an example of the related art of this operation device, such an operation device 900 for a vehicle air conditioner as illustrated in Figs. 6A and 6B has been disclosed in Japanese Unexamined Patent Application Publication No. 2010-179735. Figs. 6A and 6B are diagrams explaining the operation device 900 for a vehicle air conditioner, Fig. 6A is the exploded perspective view of the operation device 900 for a vehicle air conditioner, and Fig. 6B is a diagram equivalent to the cross-section of the operation device 900 for a vehicle air conditioner illustrated in Fig. 6A and taken along a line VIB-VIB.

The operation device 900 for a vehicle air conditioner illustrated in Figs. 6A and 6B includes a front case 903 to which a panel sheet 911 on which switch functions and designs 910 and so forth are printed are attached, a control box 905 configured by integrally coupling this front case 903 and a rear case 904, a touch-sensitive sheet 912 attached to the inner surface side of the front case 903. In addition, this operation device 900 for a vehicle air conditioner is configured so that, by touching, with a finger or the like, the switch functions and designs 910 and so forth, the touch-sensitive sheet 912 senses through the front case 903 and operation information is output. In addition, as the touch-sensitive sheet 912, one of an electrostatic capacitance method for detecting a change in the electrostatic capacitance of an electrode, a surface elastic wave method for applying a surface elastic wave to a panel surface using a vibrator and performing detection, and an acoustic pulse recognition method for performing detection using a surface vibration generated at the time of touching is used.

In addition, the operation device 900 for a vehicle air conditioner is configured so that the front case 903 and the touch-sensitive sheet 912 are formed of a transparent or translucent material and it is possible to transmit light radiated from a light source (backlight) 906 through a light diffusion plate 909. In addition, since the panel sheet 911 is configured so as to be able to transmit the light of only some of the switch functions and designs 910, this operation device 900 for a vehicle air conditioner makes it easy for an operator to visually recognize the switch functions and designs 910 and so forth.

However, in a case where the simplest and more commonly utilized electrostatic capacitance method is used as the touch-sensitive sheet 912, it is necessary to use indium tin oxide (ITO) able to transmit light, as electrodes for detection. Therefore, there has been a problem that an expensive device and time are required to subject the film of this ITO to film formation and a manufacturing cost increases.

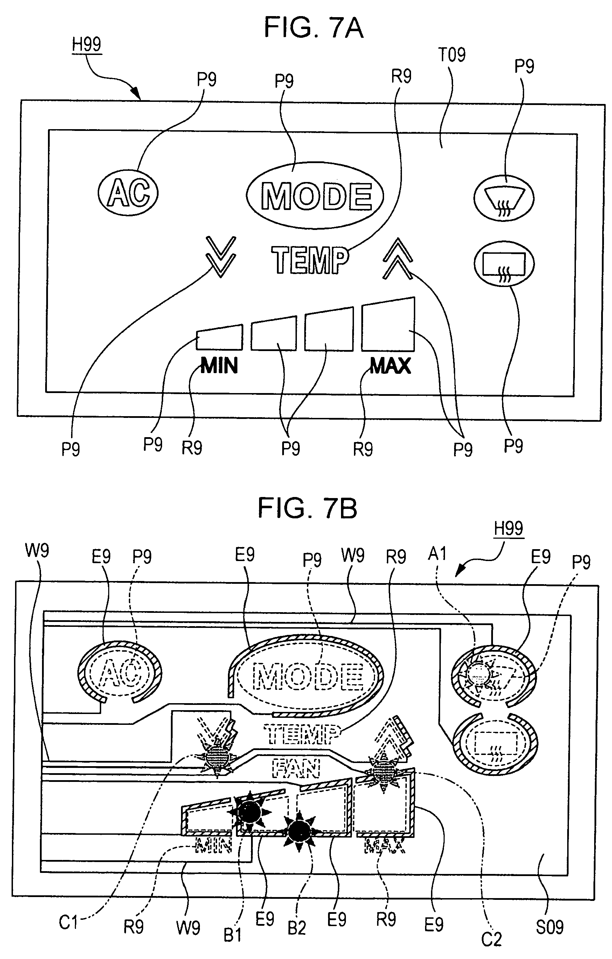

Therefore, it is conceivable that conductive ink into which carbon powder, silver powder, or the like, which has no translucency and is inexpensive, is mixed is printed and hardened to be used as an electrode for detecting electrostatic capacitance. Figs. 7A and 7B are pattern diagrams illustrating an operation panel T09 of an operation device H99 cited as a comparative example, Fig. 7A is the front view of the operation panel T09, and Fig. 7B illustrates the arrangement state of electrodes each used for detecting electrostatic capacitance and provided on a back surface side in Fig. 7A.

The operation device H99 of a comparative example, illustrated in Figs. 7A and 7B, includes the operation panel T09 where pattern portions P9 on which input operations are to be performed by an operator are formed on the front surface side thereof, and an electrostatic capacitance sensor S09 that is provided on the front surface side of this operation panel T09 and detects the position of a specific body part (not illustrated) such as a finger or the like of the operator. In this electrostatic capacitance sensor S09, electrodes E9 each used for detecting electrostatic capacitance with the specific body part F9 are provided. In addition, since having no translucency, the electrodes E9 are provided so as to skirt the pattern portions P9 while being provided near the pattern portions P9, as illustrated in Fig. 7B. In addition, this pattern portions P9 indicate characters, patterned designs, or the like expressing input functions, and are clearly distinguished from display portions R9 on which no input operation is performed and that simply indicate states.

### SUMMARY OF THE INVENTION

However, as illustrated in Fig. 7B, while there is no problem in a case where the specific body part such as a finger or the like of the operator is located in A1, there is a possibility that an input portion adjacent to an input portion originally intended to be operated is sensed in a case where the specific body part such as a finger or the like of the operator is located in B1 or B2. In addition, in a case where the specific body part is located on a wiring line in such a manner as C1 or C2, the wiring portion thereof detects a change in the electrostatic capacitance of the specific body part, and there is a possibility that one of the entirely unintended pattern portions P9 is sensed. In this way, there has been a problem that, depending on the position of the specific body part, a desired input operation is incorrectly sensed and it is difficult to reliably perform an input. Furthermore, in a case where the pattern portions P9 are provided in density higher than the comparative example, incorrect sensing more easily occurs.

The present invention solves the above-mentioned problem, and provides an operation device capable of reducing incorrect operations and reliably performing inputs and a vehicle operation device utilizing the operation device.

The present invention provides an operation device of an electrostatic capacitance type including an operation panel in which a plurality of translucent pattern portions to be operated by an operator are formed on a front surface side thereof, a conductive member including a plurality of electrodes arranged on a back surface side of the operation panel, and an electrostatic capacitance detection portion configured to detect electrostatic capacitance between the corresponding electrode and a specific body part such as a finger of the operator, wherein the conductive member includes a plurality of wiring portions connected to the electrodes, the electrodes and the wiring portions are arranged at positions not overlapping with the pattern portions when viewed in plan, an input determination electrode close to a predetermined one of the pattern portions and an incorrect input determination electrode arranged so as to be adjacent thereto and arranged at a position whose distance from the predetermined pattern portion is larger than that of the input determination electrode are included in the electrodes, and the electro-static capacitance detection portion determines the presence or absence of an operation performed on the predetermined pattern portion, in accordance with a capacitance value of a change in electrostatic capacitance of each of the input determination electrode and the incorrect input determination electrode.

According to this, in the operation device provided by the present invention, when a position operated by the specific body part such a finger is displaced from the predetermined pattern portion, the capacitance value of the corresponding incorrect input determination electrode may become high. Therefore, this capacitance value is able to be adopted as information for making a decision, used for determining the presence or absence of an operation performed on the predetermined pattern portion, and it is possible for the electrostatic capacitance detection portion to perform input determination in accordance with the capacitance value of a change in the electrostatic capacitance in each of the corresponding input determination electrode and the corresponding incorrect input determination electrode. From this, compared with the configuration of the comparative example, it is possible to reliably perform the input determination in response to an adequate operation, and it is possible to reliably reduce incorrect operations.

In addition, in the operation device provided by the present invention, the electrostatic capacitance detection portion may include a memory unit storing therein a preliminarily set first threshold value of electrostatic capacitance, and the electrostatic capacitance detection portion may compare the capacitance value from the incorrect input determination electrode and the first threshold value with each other.

According to this, when a capacitance value greater than or equal to the first threshold value is detected, it is possible to determine that the specific body part deviates from the predetermined pattern portion. Therefore, by giving more priority to the capacitance value of the corresponding incorrect input determination electrode than to determination based on the capacitance value of the corresponding input determination electrode, it is possible to determine an incorrect operation, and it is possible to more reliably perform input determination in response to an adequate operation. From this, it is possible to more reliably reduce incorrect operations.

In addition, in the operation device provided by the present invention, the electrostatic capacitance detection portion may compare a second threshold value of electrostatic capacitance preliminarily set and stored in the memory unit and the capacitance value from the input determination electrode with each other.

According to this, when a capacitance value greater than or equal to the second threshold value is detected, it is possible to determine that the predetermined pattern portion is operated. Therefore, in combination with incorrect operation determination based on the corresponding incorrect input determination electrode, it is possible to more reliably perform input determination in response to an adequate operation. From this, it is possible to more reliably reduce incorrect operations.

In addition, in the operation device provided by the present invention, the input determination electrode may include a first input determination electrode and a second input determination electrode corresponding to the respective pattern portions located away from each other by a predetermined distance, and the incorrect input determination electrode may be arranged at a position adjacent to the first input determination electrode and electrically connected to the second input determination electrode.

According to this, compared with a case of being provided independently, it is possible to reduce the total number of the wiring portions. From this, it becomes possible to save space, and it is possible to increase the degree of freedom of the arrangement of the input determination electrode, the incorrect input determination electrode, and the wiring portions.

In addition, in the operation device provided by the present invention, the input determination electrode may include a third input determination electrode and a fourth input determination electrode corresponding to the respective pattern portions adjacent to each other, and the incorrect input determination electrode may be provided between the third input determination electrode and the fourth input determination electrode.

According to this, even in a case of the pattern portions adjacent and close to each other, by comparing the capacitance values of the third input determination electrode, the fourth input determination electrode, and the incorrect input determination electrode with one another, it is possible to determine which of the pattern portions an incorrect operation is performed on or determine whether an incorrect operation is performed on both the pattern portions. From this, it is possible to more reliably perform input determination in response to an adequate operation. It is possible to more reliably reduce incorrect operations.

In addition, in the operation device provided by the present invention, at least two out of the incorrect input determination electrodes may be electrically connected to each other.

According to this, compared with a case where the incorrect input determination electrodes are provided independently, it is possible to reduce the total number of the wiring portions. From this, it becomes possible to save space, and it is possible to increase the degree of freedom of the arrangement of the input determination electrodes, the incorrect input determination electrodes, and the wiring portions.

In addition, in the operation device provided by the present invention, the incorrect input determination electrodes may configure some of the wiring portions.

According to this, it is possible to reduce the arrangement space of the incorrect input determination electrodes. From this, it becomes possible to save space, and it is possible to increase the degree of freedom of the arrangement of the input determination electrodes, the incorrect input determination electrodes, and the wiring portions.

In addition, the present invention provides a vehicle operation device mounted in a vehicle and used for operating various kinds of electronic devices in the vehicle, the vehicle operation device including the operation device according to any one of the above-mentioned aspects of the present invention, a control unit configured to transmit, to the vehicle side, a command signal corresponding to the pattern portions in the operation panel, based on a signal output from the operation device, and an illumination member configured to be arranged on the back surface side of the operation panel and illuminate the pattern portions.

According to this, even in a case where, as for operations in the vehicle, the position of the specific body part such as a finger of the operator is displaced from the predetermined pattern portion owing to a blind operation or an operation difficult to observe, it is possible to prevent input determination from being output, and it is possible to reliably reduce incorrect operations. In addition, even in a case where the vibration of a car has an influence on operations in the vehicle and it is difficult to reliably perform an operation, it is possible to reliably reduce incorrect operations.

### BRIEF DESCRIPTION OF THE DRAWINGS

Fig. 1 is a configuration perspective view explaining an operation device and a vehicle operation device of a first embodiment of the present invention;
Fig. 2 is a configuration diagram explaining the operation device and the vehicle operation device of the first embodiment of the present invention, and is a front view viewed from a Y2 side illustrated in Fig. 1;
Fig. 3 is a configuration diagram explaining the operation device and the vehicle operation device of the first embodiment of the present invention, and is a cross-sectional view taken along a line III-III illustrated in Fig. 2;
Fig. 4 is a configuration diagram explaining the operation device of the first embodiment of the present invention, and is a plan view of a wiring panel;
Fig. 5 is a configuration diagram explaining a first example of a modification to the vehicle operation device of the first embodiment of the present invention, and is a cross-sectional view compared with Fig. 3;
Figs. 6A and 6B are diagrams explaining an operation device for a vehicle air conditioner of the related art, Fig. 6A is an exploded perspective view of the operation device for a vehicle air conditioner, and Fig. 6B is a diagram equivalent to a cross-section of the operation device for a vehicle air conditioner illustrated in Fig. 6A and taken along a line VIB-VIB; and
Figs. 7A and 7B are pattern diagrams illustrating an operation device cited as a comparative example, Fig. 7A is a front view of the operation device from an operation panel side arranged in a front surface, and Fig. 7B is a diagram in which an operation panel in Fig. 7A is omitted and an electrostatic capacitance sensor provided on a back surface side of the operation panel is visually recognized.

### DESCRIPTION OF THE PREFERRED EMBODIMENTS

Hereinafter, embodiments of the present invention will be described with reference to drawings.

### [First Embodiment]

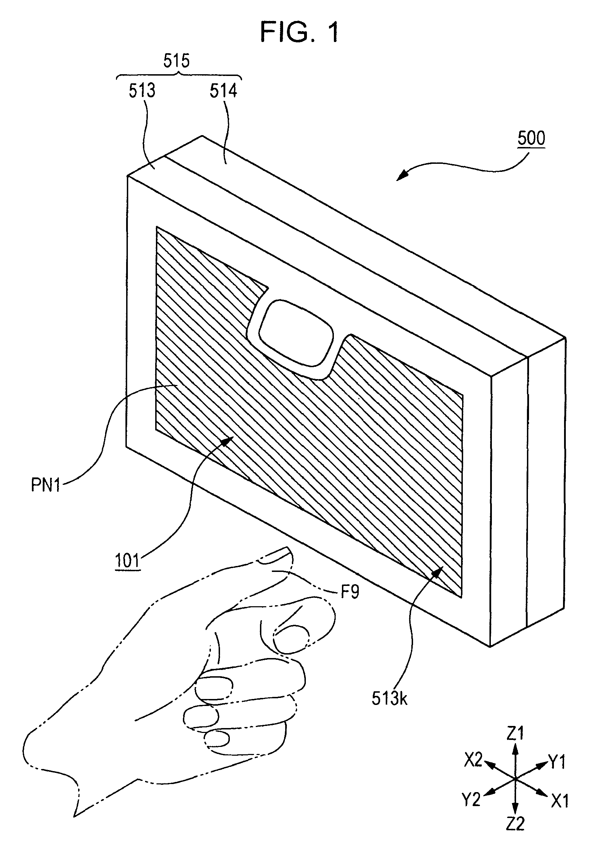

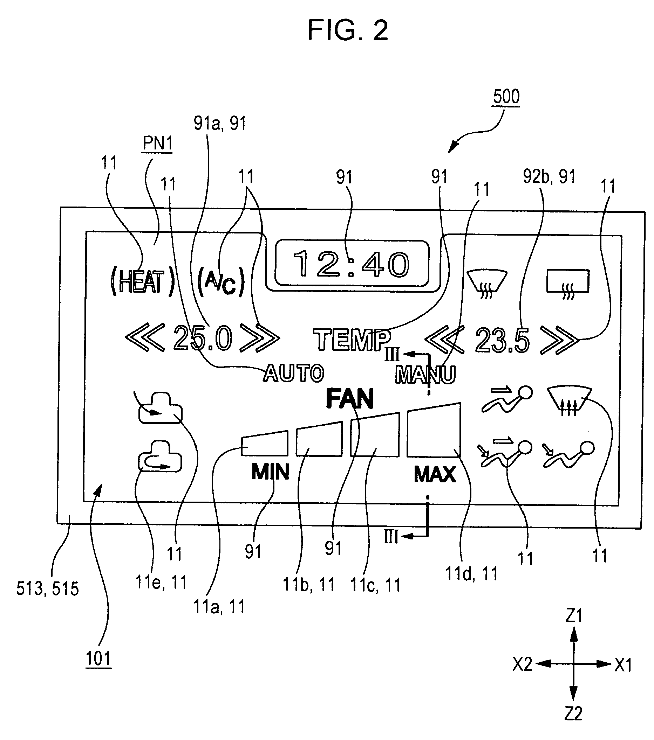

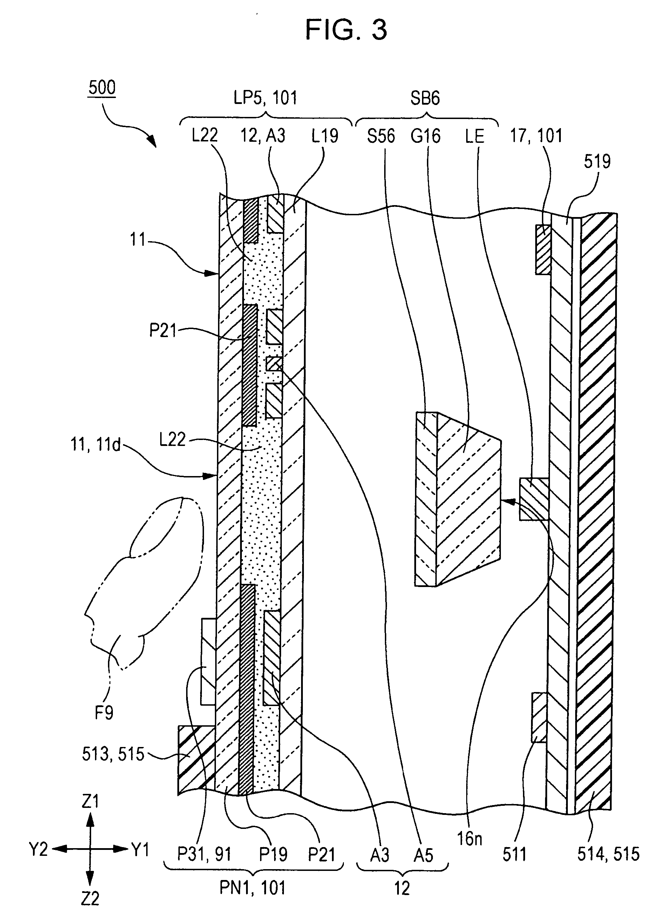

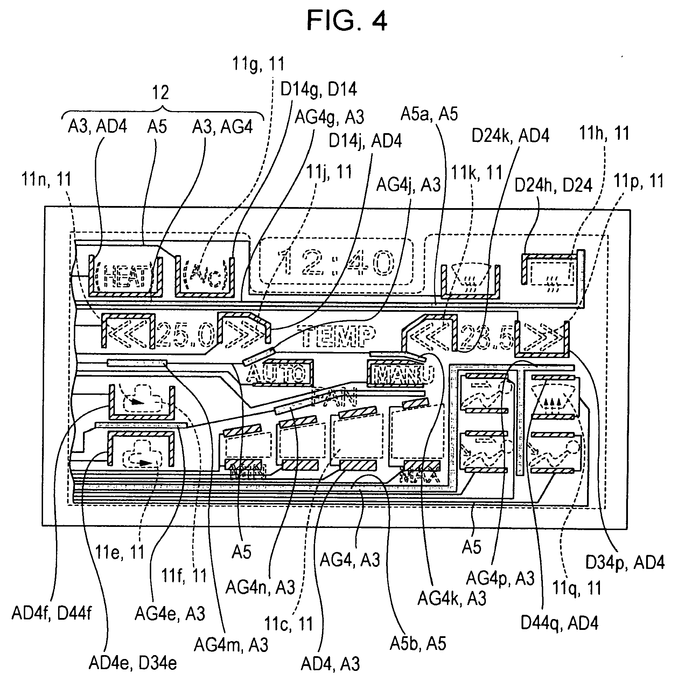

In a first embodiment of the present invention, an operation device 101 and a vehicle operation device 500 utilizing the operation device 101 will be described. Fig. 1 is a configuration perspective view explaining the operation device 101 and the vehicle operation device 500 of the first embodiment of the present invention. Fig. 2 is a configuration diagram explaining the operation device 101 and the vehicle operation device 500 of the first embodiment of the present invention, and is a front view viewed from a Y2 side illustrated in Fig. 1. Fig. 3 is a configuration diagram explaining the operation device 101 and the vehicle operation device 500 of the first embodiment of the present invention, and is a cross-sectional view taken along a line III-III illustrated in Fig. 2. Fig. 4 is a configuration diagram explaining the operation device of the first embodiment of the present invention, and is the plan view of a wiring panel LP5. In addition, in Fig. 1, pattern portions 11 and display portions 91 in an operation panel PN1 are indicated by hatching, and detailed drawing patterns illustrated in Fig. 2 are omitted. In addition, in Fig. 4, for the sake of explaining simply, the pattern portions 11 and the display portions 91 in the operation panel PN1 are superimposed and indicated using dashed-two dotted lines.

The vehicle operation device 500 of the first embodiment of the present invention may have such an external appearance as illustrated in Fig. 1 and Fig. 2, and include the operation device 101 including the operation panel PN1 to be operated by an operator, a control unit 511 configured to transmit a command signal to a vehicle side, based on a signal output from the operation device 101, and an illumination member SB6 configured to illuminate the operation panel PN1, as illustrated in Fig. 3. In addition to these, the vehicle operation device 500 of the first embodiment of the present invention may include an enclosure 515 containing the operation device 101, the control unit 511, and the illumination member SB6, and a circuit substrate 519 in which a light-emitting light source LE of the illumination member SB6 and the control unit 511 are mounted. In addition, this vehicle operation device 500 is mounted in a vehicle, and used for operating various kinds of electronic devices within the vehicle.

As illustrated in Fig. 1, the operation device 101 in the vehicle operation device 500 is contained in the box-shaped enclosure 515, and the operation panel PN1 to be operated by the operator is provided so as to be exposed on the surface of the front surface thereof (the Y2 side illustrated in Fig. 1). In addition, as illustrated in Fig. 2, in the operation panel PN1, the pattern portions 11 to be operated by the operator are formed and the display portions 91 for giving information to the operator are formed. In addition, the operator operates one of the pattern portions 11 in the operation panel PN1 with a specific body part F9 such as a finger, and thus, an operation corresponding to the relevant pattern portion 11 is able to be performed. For example, if the specific body part F9 such as a finger comes into contact with one of the pattern portions 11 (11a, 11b, 11c, and 11d) indicating the levels of an air conditioner illustrated in Fig. 2, the air blowing of the air conditioner is performed.

The control unit 511 in the vehicle operation device 500 is configured using an integrated circuit (IC), and is mounted in the circuit substrate 519 as illustrated in Fig. 3. In addition, the control unit 511 transmits command signals corresponding to the pattern portions 11 in the operation panel PN1 to the vehicle side through a connector not illustrated. Upon receiving the command signals, the vehicle side performs respective operations corresponding to the pattern portions 11.

In addition, the control unit 511 performs control of display in one of the display portions 91 whose display is variable, for example, display in a display portion 91a and a display portion 91b serving as temperature indications illustrated in Fig. 2. In addition, while, in the first embodiment of the present invention, input portions relating to the air conditioner for the vehicle are used as the pattern portions 11 in the operation panel PN1, the pattern portions 11 in the operation panel PN1 are not limited to these, and may be input portions for, for example, an audio operation or a navigation operation.

As illustrated in Fig. 3, the illumination member SB6 in the vehicle operation device 500 may include the light-emitting light source LE mounted in the circuit substrate 519, a light guide G16 including an incident light portion 16n upon which light from the light-emitting light source LE is incident, a scattering member S56 provided between the light guide G16 and the operation panel PN1. In addition, the illumination member SB6 may be arranged on the back surface side (a Y1 side illustrated in Fig. 1) of the operation panel PN1, and illuminates the translucent pattern portions 11.

The light-emitting light source LE of the illumination member SB6 suitably uses a light emitting diode (LED) based on a top-surface-emitting method, and is arranged at a position facing the incident light portion 16n and arranged with the light-emitting surface thereof in a direction of enabling light to enter the incident light portion 16n, as illustrated in Fig. 3.

The light guide G16 in the illumination member SB6 has a block-like shape as illustrated in Fig. 3, and as the material thereof, an acrylic synthetic resin having translucency is used. In addition, as illustrated in Fig. 3, the light guide G16 is provided so as to face the operation panel PN1, and the scattering member S56 is provided between the operation panel PN1 and the light guide G16. In addition, the light incident from the incident light portion 16n propagates through the light guide G16, is output to the outside of the light guide G16, and is incident upon the scattering member S56. In addition, while the acrylic resin is used as the synthetic resin material, the synthetic resin material is not limited to this, and, for example, a polyurethane resin, a polycarbonate resin, a silicone resin, or the like may be used.

The scattering member S56 in the illumination member SB6 utilizes a film material having a characteristic of reflecting and scattering light in the inside of a layer, and attached to the light guide G16 on a side facing the operation panel PN1 as illustrated in Fig. 3. From this, the light incident upon the scattering member S56 is reflected and scattered, and then, emitted to a front surface side (the Y2 side illustrated in Fig. 1), as irradiation light. In addition, this irradiation light is radiated to the translucent pattern portions 11, and when the operation device 101 is visually recognized from a front surface side, a user is able to visually recognize this irradiation light and confirm the illuminated pattern portions 11.

Using a synthetic resin such as a polybutylene terephthalate resin (PBT), the enclosure 515 of the vehicle operation device 500 is formed in a box shape, and configured by combining an upper case 513 and a lower case 514, as illustrated in Fig. 1. In addition, the upper case 513 includes a rectangular-shaped opening portion 513k on a front surface side on which the operator performs an operation, and the front surface side of the operation panel PN1 is exposed.

The circuit substrate 519 in the vehicle operation device 500 utilizes a more commonly utilized printed wiring board (PWB), and, as illustrated in Fig. 3 and described above, the light-emitting light source LE of the illumination member SB6 and the control unit 511 are soldered and mounted therein.

Next, the operation device 101 of the present invention will be described in more detail. As illustrated in Fig. 3, the operation device 101 of the present invention may include the operation panel PN1 in which the translucent pattern portions 11 are formed on the front surface side thereof, the wiring panel LP5 that is arranged on the back surface side of the operation panel PN1 and includes a plurality of electrodes A3, and an electrostatic capacitance detection portion 17 that detects the electrostatic capacitances of the electrodes A3.

As illustrated in Fig. 3, the operation panel PN1 in the operation device 101 includes a translucent base material P19, a light shielding layer P21 formed in the back surface of the base material P19, and a display layer P31 formed in the front surface of the base material P19.

The base material P19 of the operation panel PN1 is formed of a colorless and translucent polycarbonate synthetic resin and has a plate-like shape as illustrated in Fig. 3, and the surface of the base material P19 is visually recognized by the user. In addition, while, as the synthetic resin material, the polycarbonate resin is used, the synthetic resin material is not limited to this, and for example, an acrylic resin, a polyurethane resin, a silicone resin, or the like may be used.

The light shielding layer P21 of the operation panel PN1 is formed of a black acrylic synthetic resin having a light blocking effect. In addition, as illustrated in Fig. 3, the light shielding layer P21 of the operation panel PN1 is formed in the back surface of the base material P19, and blocks out the irradiation light from the illumination member SB6. Therefore, only a portion in which this light shielding layer P21 is not formed transmits the irradiation light, and is visually recognized as an illumination portion by the user at the time of illuminating. This illumination portion forms the above-mentioned pattern portions 11 and some of the display portions 91. In addition, the translucent pattern portions 11 are visually recognized by the operator, and the operator operates the pattern portions 11. The manufacture of this light shielding layer P21 is easily performed by printing black ink in which carbon power, an acrylic resin, and a solvent are mixed, on the back surface of the base material P19 using a screen plate, and drying and hardening the black ink.

The display layer P31 of the operation panel PN1 is formed of a colored acrylic synthetic resin, formed in the front surface of the base material P19 as illustrated in Fig. 3, and forms the display portions 91 whose display does not change. In the same way as the light shielding layer P21, the manufacture of this display layer P31 is easily performed by printing colored ink in which a pigment or a dye, an acrylic resin, and a solvent are mixed, on the front surface of the base material P19 using a screen plate, and drying and hardening the colored ink.

As illustrated in Fig. 3, the wiring panel LP5 of the operation device 101 includes a translucent base material L19, a conductive member 12 formed in the front surface (the Y2 side illustrated in Fig. 3) of the base material L19, and an adhesive layer L22 formed so as to cover the conductive member 12. In addition, the wiring panel LP5 of the operation device 101 is arranged on the back surface side of the operation panel PN1 and attached to the operation panel PN1 using the adhesive layer L22. In addition, the adhesive layer L22 is formed of a translucent acrylic synthetic resin, and the irradiation light from the illumination member SB6 is able to be transmitted therethrough.

The base material L19 of the wiring panel LP5 is formed of a film base material of a synthetic resin of colorless and translucent polyethylene terephthalate (PET), and enables the irradiation light to be transmitted therethrough. In addition, while, as the synthetic resin material, the polyethylene terephthalate resin is used, the synthetic resin material is not limited to this, and, for example, a polyurethane resin, an acrylic resin, a polyethylene naphthalate resin (PEN), or the like may be used.

As illustrated in Fig. 4, the conductive member 12 in the wiring panel LP5 may include the electrodes A3 arranged around the pattern portions 11 and a plurality of wiring portions A5 connected to the respective electrodes A3, and the electrodes A3 and the wiring portions A5 may be arranged at positions not overlapping with the pattern portions 11 when viewed in plan. The manufacture of this conductive member 12 is easily performed by printing silver ink in which silver powder, a polyester resin, and a solvent are mixed, on the front surface of the base material L19 using a screen plate, and drying and hardening the silver ink.

In addition, as a specific example described later in the present paragraph (see Fig. 4), the conductive member 12 includes input determination electrodes AD4 located close to respective predetermined pattern portions 11, and incorrect input determination electrodes AG4 arranged adjacent to the respective input determination electrodes AD4, from among the electrodes A3. Each of the incorrect input determination electrodes AG4 may be arranged at a position whose distance from the corresponding predetermined pattern portion 11 is larger than that of the corresponding input determination electrode AD4. For example, in Fig. 4, in a case of a predetermined pattern portion 11e, an input determination electrode AD4e and an incorrect input determination electrode AG4e correspond to that, and in a case of a predetermined pattern portion 11f, an input determination electrode AD4f and the incorrect input determination electrode AG4e correspond to this.

In addition, as a specific example described later in the present paragraph (see Fig. 4), the input determination electrodes AD4 in the conductive member 12 may include a first input determination electrode D14 and a second input determination electrode D24 corresponding to respective pattern portions 11 located away from each other by a predetermined distance. In addition, the corresponding incorrect input determination electrode AG4 arranged at a position adjacent to the corresponding first input determination electrode D14 may be electrically connected to the corresponding second input determination electrode D24. For example, a first input determination electrode D14g corresponding to a pattern portion 11g for an air-conditioner operation, a second input determination electrode D24h corresponding to a pattern portion 11h for a defroster operation, and an incorrect input determination electrode AG4g adjacent to the first input determination electrode D14g, illustrated in Fig. 4, correspond to that. For example, a first input determination electrode D14j corresponding to a pattern portion 11j for a temperature rise operation, a second input determination electrode D24k corresponding to a pattern portion 11k for a heater operation, and an incorrect input determination electrode AG4j adjacent to the first input determination electrode D14j, illustrated in Fig. 4, correspond to this.

From this, the corresponding incorrect input determination electrode AG4 and the corresponding second input determination electrode D24 may be electrically connected to each other (in the example of FIG. 4, the incorrect input determination electrode AG4g and the second input determination electrode D24h are electrically connected to each other, or the incorrect input determination electrode AG4j and the second input determination electrode D24k are electrically connected to each other), and may be connected to one corresponding wiring portion A5. Therefore, compared with a case of being provided independently, it is possible to reduce the total number of the wiring portions A5. From this, it becomes possible to save space, and it is possible to increase the degree of freedom of the arrangement of the input determination electrodes AD4, the incorrect input determination electrodes AG4, and the wiring portions A5. Furthermore, since it is possible to reduce the total number of the wiring portions A5, it is possible to reduce the amount of data processed in an integrated circuit (IC) to which the wiring portions A5 are connected, and it is possible to reduce a load on the integrated circuit (IC).

Furthermore, as a specific example described later in the present paragraph (see Fig. 4), the input determination electrodes AD4 in the conductive member 12 may include a third input determination electrode D34 and a fourth input determination electrode D44 corresponding to respective pattern portions 11 located adjacent to each other. In addition, between the corresponding third input determination electrode D34 and the corresponding fourth input determination electrode D44, the corresponding incorrect input determination electrode AG4 may be provided. For example, the incorrect input determination electrode AG4e located between a third input determination electrode D34e and a fourth input determination electrode D44f provided for respective pattern portions 11e and 11f) used for fresh and recirculation operations, illustrated in Fig. 4, corresponds to that. For example, an incorrect input determination electrode AG4p provided between a third input determination electrode D34p provided for a pattern portion 11p used for a temperature rise operation and a fourth input determination electrode D44q provided for a pattern portion 11q used for an air blowing operation, illustrated in Fig. 4, corresponds to this.

In addition, in the first embodiment of the present invention, as a specific example described later in the present paragraph (see Fig. 4), at least two incorrect input determination electrodes AG4 out of the incorrect input determination electrodes AG4 in the conductive member 12 may be electrically connected to each other. For example, as illustrated in Fig. 4, the three incorrect input determination electrodes AG4 of the incorrect input determination electrode AG4j, an incorrect input determination electrode AG4k, and an incorrect input determination electrode AG4m correspond to this, and the two incorrect input determination electrodes AG4 of the incorrect input determination electrode AG4e and an incorrect input determination electrode AG4n correspond to this. From this, compared with a case where the incorrect input determination electrodes AG4 are provided independently, it is possible to reduce the total number of the wiring portions A5. From this, it becomes possible to save space, and it is possible to increase the degree of freedom of the arrangement of the input determination electrodes AD4, the incorrect input determination electrodes AG4, and the wiring portions A5.

Furthermore, as illustrated in Fig. 4, the incorrect input determination electrodes AG4 may configure some of the wiring portions A5 (see, for example, a wiring portion A5a and a wiring portion A5b illustrated in Fig. 4). From this, it is possible to reduce the arrangement space of the incorrect input determination electrodes AG4. From this, it becomes possible to save space, and it is possible to increase the degree of freedom of the arrangement of the input determination electrodes AD4, the incorrect input determination electrodes AG4, and the wiring portions A5.

The electrostatic capacitance detection portion 17 in the operation device 101 is mounted in the circuit substrate 519 as illustrated in Fig. 3, includes an integrated circuit (IC) including a capacitance detection circuit, and detects electrostatic capacitance between the corresponding electrode A3 and the specific body part F9 such as a finger of the operator.

In addition, the electrostatic capacitance detection portion 17 may include a control unit including a control circuit in an integrated circuit (IC), and a memory unit storing therein the preliminarily set threshold value of electrostatic capacitance, determine the presence or absence of an operation performed on a predetermined pattern portion 11, based on a detection result of the detected electrostatic capacitance, and transmit, to the vehicle side, a command signal from that determination result. In addition, connections between the electrodes A3, the wiring portions A5, and the electrostatic capacitance detection portion 17 are performed by flexible printed circuits (FPC).

In the operation device 101 of the first embodiment of the present invention, configured as above, the control unit in the electrostatic capacitance detection portion 17 may perform comparison between the capacitance values of changes in electrostatic capacitances in the corresponding input determination electrode AD4 and the corresponding incorrect input determination electrode AG4, and determine whether or not a predetermined pattern portion 11 to which the corresponding input determination electrode AD4 and the corresponding incorrect input determination electrode AG4 relate is operated. At that time, in a case where a position operated by the specific body part F9 such a finger is displaced from the predetermined pattern portion 11, the capacitance value of the corresponding incorrect input determination electrode AG4 becomes high, and this capacitance value is able to be adopted as information for making a decision, used for determining the presence or absence of an operation performed on the predetermined pattern portion 11. From this, compared with a case where, as the above-mentioned comparative example, determination is performed using one electrode E9 in the electrostatic capacitance sensor S09, it is possible to perform input determination in accordance with a capacitance value in each of the corresponding input determination electrode AD4 and the corresponding incorrect input determination electrode AG4. From this, it is possible to reliably perform the input determination in response to an adequate operation, and it is possible to reliably reduce incorrect operations. Specifically, in a case where, for example, the capacitance value of the corresponding incorrect input determination electrode AG4 becomes large, input determination may be prevented from being output, or by comparing the capacitance value of the corresponding input determination electrode AD4 and the capacitance value of the corresponding incorrect input determination electrode AG4, input determination may be prevented from being output.

In addition, in the first embodiment of the present invention, the electrostatic capacitance detection portion 17 may compare a capacitance value from the corresponding incorrect input determination electrode AG4 and a first threshold value serving as a threshold value preliminarily stored in the memory unit with each other, and when a capacitance value greater than or equal to the first threshold value is detected, the electrostatic capacitance detection portion 17 may determine that the specific body part F9 deviates from the predetermined pattern portion 11. Therefore, by giving more priority to the capacitance value of the corresponding incorrect input determination electrode AG4 than to determination based on the capacitance value of the corresponding input determination electrode AD4, it is possible to determine an incorrect operation, and it is possible to more reliably perform input determination in response to an adequate operation. From this, it is possible to more reliably reduce incorrect operations.

Furthermore, the electrostatic capacitance detection portion 17 may compare a capacitance value from the corresponding input determination electrode AD4 and a second threshold value serving as a threshold value preliminarily stored in the memory unit with each other, and when a capacitance value greater than or equal to the second threshold value is detected, the electrostatic capacitance detection portion 17 may determine that the predetermined pattern portion 11 is operated. Therefore, in combination with incorrect operation determination based on the corresponding incorrect input determination electrode AG4, it is possible to more reliably perform input determination in response to an adequate operation. From this, it is possible to more reliably reduce incorrect operations. In addition, the above-mentioned threshold values may be the values of absolute amounts, and may be the values of the amounts of change from reference values.

In addition, in the first embodiment of the present invention, the corresponding incorrect input determination electrode AG4 may be provided between the corresponding third input determination electrode D34 and the corresponding fourth input determination electrode D44. Therefore, even in a case of the pattern portions 11 adjacent and close to each other, by comparing the capacitance values of the corresponding third input determination electrode D34, the corresponding fourth input determination electrode D44, and the corresponding incorrect input determination electrode AG4 with one another, it is possible to determine which of the pattern portions 11 an incorrect operation is performed on or determine whether an incorrect operation is performed on both the pattern portions 11. From this, it is possible to more reliably perform input determination in response to an adequate operation. It is possible to more reliably reduce incorrect operations.

In addition, in the first embodiment of the present invention, the operation device 101 having such advantageous effects as described above is used for the vehicle operation device 500. In particular, in the vehicle operation device 500, as for operations in the vehicle, many operations such as blind operations and operations difficult to observe are performed. Therefore, even in a case where a position operated by the specific body part F9 such as a finger of the operator is displaced from the predetermined pattern portion 11, it is possible to prevent input determination from being output, and it is possible to reliably reduce incorrect operations. In addition, in the vehicle operation device 500, even in a case where the vibration of a car has an influence on operations in the vehicle and it is difficult to reliably perform an operation, it is possible to reliably reduce incorrect operations. In this way, it is possible to suitably apply the operation device 101 of the first embodiment of the present invention to the vehicle operation device 500.

Advantageous effects in the operation device 101 and the vehicle operation device 500 of the first embodiment of the present invention, configured as above, will be collectively described.

In the operation device 101 of the first embodiment of the present invention, the corresponding input determination electrode AD4 may be arranged so as to be located close to a predetermined pattern portion 11, and the corresponding incorrect input determination electrode AG4 may be arranged so as to be adjacent thereto and arranged at a position whose distance from the predetermined pattern portion 11 is larger than that of the corresponding input determination electrode AD4. Therefore, when a position operated by the specific body part F9 such as a finger is displaced from the predetermined pattern portion, the capacitance value of the corresponding incorrect input determination electrode AG4 becomes high. Therefore, this capacitance value is able to be adopted as information for making a decision, used for determining the presence or absence of an operation performed on the predetermined pattern portion 11, and the electrostatic capacitance detection portion 17 may perform input determination in accordance with the capacitance value of a change in the electrostatic capacitance of each of the corresponding input determination electrode AD4 and the corresponding incorrect input determination electrode AG4. From this, compared with case where, as the above-mentioned comparative example, determination is performed using one electrode E9 in the electrostatic capacitance sensor S09, it is possible to reliably perform input determination in response to an adequate operation, and it is possible to reliably reduce incorrect operations.

In addition, the electrostatic capacitance detection portion 17 may compare the capacitance value from the corresponding incorrect input determination electrode AG4 and the first threshold value with each other, and when a capacitance value greater than or equal to the first threshold value is detected, the electrostatic capacitance detection portion 17 may determine that the specific body part F9 deviates from the predetermined pattern portion 11. Therefore, by giving more priority to the capacitance value of the corresponding incorrect input determination electrode AG4 than to determination based on the capacitance value of the corresponding input determination electrode AD4, it is possible to determine an incorrect operation, and it is possible to more reliably perform input determination in response to an adequate operation. From this, it is possible to more reliably reduce incorrect operations.

In addition, the electrostatic capacitance detection portion 17 may compare the capacitance value from the corresponding input determination electrode AD4 and the second threshold value with each other. Therefore, when a capacitance value greater than or equal to the second threshold value is detected, the electrostatic capacitance detection portion 17 may determine that the predetermined pattern portion 11 is operated. Therefore, in combination with incorrect operation determination based on the corresponding incorrect input determination electrode AG4, it is possible to more reliably perform input determination in response to an adequate operation. From this, it is possible to more reliably reduce incorrect operations.

In addition, the corresponding incorrect input determination electrode AG4 and the corresponding second input determination electrode D24 may be electrically connected to each other and be connected to one corresponding wiring portion A5. Therefore, compared with a case of being provided independently, it is possible to reduce the total number of the wiring portions A5. From this, it becomes possible to save space, and it is possible to increase the degree of freedom of the arrangement of the input determination electrodes AD4, the incorrect input determination electrodes AG4, and the wiring portions A5. Furthermore, since it is possible to reduce the total number of the wiring portions A5, it is possible to reduce the amount of data processed in an integrated circuit (IC) to which the wiring portions A5 are connected, and it is possible to reduce a load on the integrated circuit (IC).

In addition, between the corresponding third input determination electrode D34 and the corresponding fourth input determination electrode D44, the corresponding incorrect input determination electrode AG4 may be provided. Therefore, even in a case of the pattern portions 11 adjacent and close to each other, by comparing the capacitance values of the corresponding third input determination electrode D34, the corresponding fourth input determination electrode D44, and the corresponding incorrect input determination electrode AG4 with one another, it is possible to determine which of the pattern portions 11 an incorrect operation is performed on or determine whether an incorrect operation is performed on both the pattern portions 11. From this, it is possible to more reliably perform input determination in response to an adequate operation. It is possible to more reliably reduce incorrect operations.

In addition, at least two incorrect input determination electrodes AG4 may be electrically connected to each other. Therefore, compared with a case where the incorrect input determination electrodes AG4 are provided independently, it is possible to reduce the total number of the wiring portions A5. From this, it becomes possible to save space, and it is possible to increase the degree of freedom of the arrangement of the input determination electrodes AD4, the incorrect input determination electrodes AG4, and the wiring portions A5.

In addition, since the incorrect input determination electrodes AG4 may configure some of the wiring portions A5, it is possible to reduce the arrangement space of the incorrect input determination electrodes AG4. From this, it becomes possible to save space, and it is possible to increase the degree of freedom of the arrangement of the input determination electrodes AD4, the incorrect input determination electrodes AG4, and the wiring portions A5.

The vehicle operation device 500 of the first embodiment of the present invention includes the operation device 101 according to any one of the above-mentioned aspects of the embodiment. Therefore, even in a case where, as for operations in a vehicle, the position of the specific body part F9 such as a finger of the operator is displaced from the predetermined pattern portion 11 owing to a blind operation or an operation difficult to observe, it is possible to prevent input determination from being output, and it is possible to reliably reduce incorrect operations. In addition, even in a case where the vibration of a car has an influence on operations in the vehicle and it is difficult to reliably perform an operation, it is possible to reliably reduce incorrect operations.

In addition, the present invention is not limited to the above-mentioned embodiment, and may be modified and implemented, for example, as follows, and these embodiments belong to the technical scope of the present invention.

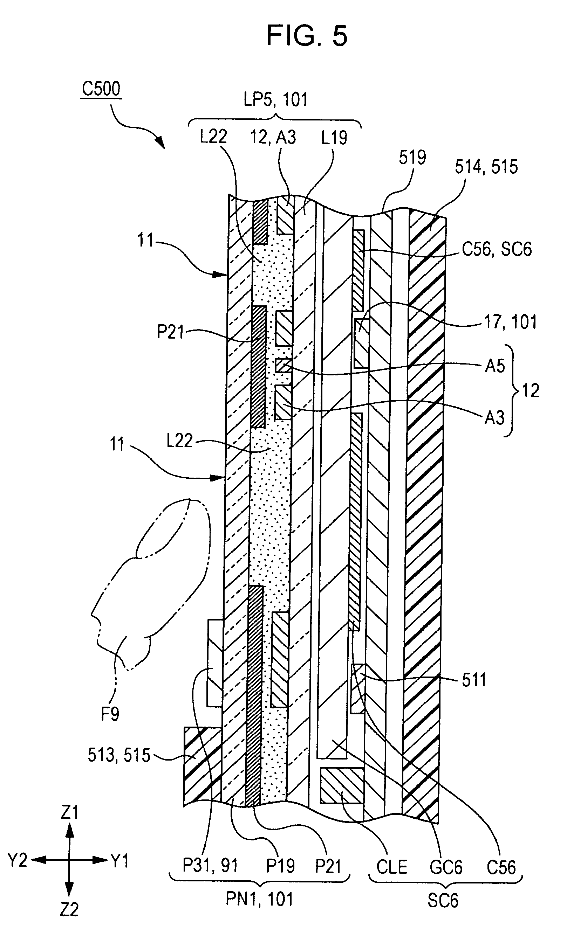

Fig. 5 is a configuration diagram explaining a first example of a modification to the vehicle operation device 500 of the first embodiment of the present invention, and is a cross-sectional view compared with Fig. 3.

### <First Example of Modification>

While, in the above-mentioned first embodiment, the illumination member SB6 is configured using the light-emitting light source LE of LED based on the top-surface-emitting method, the block-shaped light guide G16, and the scattering member S56, the illumination member is not limited to this. As illustrated in, for example, Fig. 5, an illumination member SC6 may be configured using a light-emitting light source CLE of LED based on a side-surface-emitting method, a flat-plate shaped light guide GC6, and a diffusion layer C56 formed on the back surface side of the light guide GC6. From this, it is possible to reduce the thickness of a vehicle operation device C500.

### <Second Example of Modification>

While, in the above-mentioned embodiment, a configuration in which a colorless base material having a light-transmitting property is used as the base material L19 for the wiring panel LP5 so as to transmit the irradiation light is adopted, the irradiation light may be transmitted by opening regions corresponding to the pattern portions 11 in the operation panel PN1. From this, it is not necessary to use a colorless and transparent base material.

The present invention is not limited to the above-mentioned embodiments, and may be arbitrarily modified without departing from the scope of the present invention.

## Claims

1. An operation device (101) of an electrostatic capacitance type comprising:
an operation panel (PN1) in which a plurality of translucent pattern portions (11) to be operated by an operator are formed on a front surface side thereof;
a conductive member (12) including a plurality of electrodes (A3) arranged on a back surface side of the operation panel (PN1); and
an electrostatic capacitance detection portion (17) configured to detect electrostatic capacitance between the corresponding electrode (A3) and a specific body part (F9) such as a finger of the operator, wherein
the conductive member (12) includes a plurality of wiring portions (A5) connected to the electrodes (A3),
the electrodes (A3) and the wiring portions (A5) are arranged at positions not overlapping with the pattern portions (11) when viewed in plan,
an input determination electrode (AD4) close to a predetermined one of the pattern portions (11) and an incorrect input determination electrode (AG4) arranged so as to be adjacent thereto and arranged at a position whose distance from the predetermined pattern portion (11) is larger than that of the input determination electrode (AD4) are included in the electrodes (A3), and
the electrostatic capacitance detection portion (17) determines the presence or absence of an operation performed on the predetermined pattern portion (11), in accordance with a capacitance value of a change in electrostatic capacitance of each of the input determination electrode (AD4) and the incorrect input determination electrode (AG4).

2. The operation device (101) according to Claim 1, wherein
the electrostatic capacitance detection portion (17) includes a memory unit storing therein a preliminarily set first threshold value of electrostatic capacitance, and
the electrostatic capacitance detection portion (17) compares the capacitance value from the incorrect input determination electrode (AG4) and the first threshold value with each other.

3. The operation device (101) according to Claim 2, wherein
the electrostatic capacitance detection portion (17) compares a second threshold value of electrostatic capacitance preliminarily set and stored in the memory unit and the capacitance value from the input determination electrode (AD4) with each other.

4. The operation device (101) according to Claim 3, wherein
the input determination electrode (AD4) includes a first input determination electrode (D14) and a second input determination electrode (D24) corresponding to the respective pattern portions (11) located away from each other by a predetermined distance, and
the incorrect input determination electrode (AG4) is arranged at a position adjacent to the first input determination electrode (D14) and electrically connected to the second input determination electrode (D24).

5. The operation device (101) according to any one of Claim 3 or Claim 4, wherein
the input determination electrode (AD4) includes a third input determination electrode (D34) and a fourth input determination electrode (D44) corresponding to the respective pattern portions (11) adjacent to each other, and
the incorrect input determination electrode (AG4) is provided between the third input determination electrode (D34) and the fourth input determination electrode (D44).

6. The operation device (101) according to any one of Claim 1 to Claim 5, wherein
at least two out of the incorrect input determination electrodes (AG4) are electrically connected to each other.

7. The operation device (101) according to any one of Claim 1 to Claim 6, wherein
the incorrect input determination electrodes (AG4) configure some of the wiring portions (A5).

8. A vehicle operation device (500) mounted in a vehicle and used for operating various kinds of electronic devices in the vehicle, the vehicle operation device (500) comprising:
the operation device (101) according to any one of Claim 1 to Claim 7;
a control unit (511) configured to transmit, to the vehicle side, a command signal corresponding to the pattern portions (11) in the operation panel (PN1), based on a signal output from the operation device (101); and
an illumination member (SB6 or SC6) configured to be arranged on the back surface side of the operation panel (PN1) and illuminate the pattern portions (11).

## Patentansprüche

1. Bedienungsvorrichtung (101) eines elektrostatischen Kapazitätstyps, aufweisend:
ein Bedienungsfeld (PN1), in dem eine Mehrzahl von durch eine Bedienungsperson zu betätigenden durchscheinenden Musterbereichen (11) auf einer vorderen Oberflächenseite desselben gebildet ist;
ein leitfähiges Element (12), das eine Mehrzahl von Elektroden (A3) beinhaltet, die auf einer rückwärtigen Oberflächenseite des Bedienungsfelds (PN1) angeordnet sind; und
einen Detektionsbereich (17) für elektrostatische Kapazität, der zum Detektieren von elektrostatischer Kapazität zwischen der entsprechenden Elektrode (A3) und einem bestimmten Körperteil (F9), wie z.B. einem Finger der Bedienungsperson, ausgebildet ist,
wobei das leitfähige Element (12) eine Mehrzahl von mit den Elektroden (A3) verbundenen Verdrahtungsbereichen (A5) aufweist,
wobei die Elektroden (A3) und die Verdrahtungsbereiche (A5) in Positionen angeordnet sind, die in der Draufsicht betrachtet die Musterbereiche (11) nicht überlappen,
wobei eine Eingabe-Bestimmungselektrode (AD4) nahe einem vorbestimmten der Musterbereiche (11) und eine Falscheingabe-Bestimmungselektrode (AG4), die benachbart dazu angeordnet ist sowie in einer Position angeordnet ist, deren Abstand von dem vorbestimmten Musterbereich (11) größer als der der Eingabe-Bestimmungselektrode (AD4) ist, in den Elektroden (A3) enthalten sind, und
wobei der Detektionsbereich (17) für elektrostatische Kapazität die Anwesenheit oder Abwesenheit von einer an dem vorbestimmten Musterbereich (11) ausgeführten Betätigung in Abhängigkeit von einem Kapazitätswert einer Änderung der elektrostatischen Kapazität von jeder der Eingabe-Bestimmungselektrode (AD4) und der Falscheingabe-Bestimmungselektrode (AG4) feststellt.

2. Bedienungsvorrichtung (101) nach Anspruch 1,
wobei der Detektionsbereich (17) für elektrostatische Kapazität eine Speichereinheit aufweist, in der ein vorab vorgegebener erster Schwellenwert der elektrostatischen Kapazität gespeichert ist, und
wobei der Detektionsbereich (17) für elektrostatische Kapazität den Kapazitätswert von der Falscheingabe-Bestimmungselektrode (AG4) und den ersten Schwellwert miteinander vergleicht.

3. Bedienungsvorrichtung (101) nach Anspruch 2,
wobei der Detektionsbereich (17) für elektrostatische Kapazität einen vorab vorgegebenen und in der Speichereinheit gespeicherten zweiten Schwellenwert der elektrostatischen Kapazität und den Kapazitätswert von der Eingabe-Bestimmungselektrode (AD4) miteinander vergleicht.

4. Bedienungsvorrichtung (101) nach Anspruch 3,
wobei die Eingabe-Bestimmungselektrode (AD4) eine erste Eingabe-Bestimmungselektrode (D14) und eine zweite Eingabe-Bestimmungselektrode (D24) beinhaltet, die den jeweiligen Musterbereichen (11) entsprechen, die in einem vorbestimmten Abstand voneinander abgelegen angeordnet sind, und wobei die Falscheingabe-Bestimmungselektrode (AG4) in einer Position benachbart der ersten Eingabe-Bestimmungselektrode (D14) angeordnet ist und mit der zweiten Eingabe-Bestimmungselektrode (D24) elektrisch verbunden ist.

5. Bedienungsvorrichtung (101) nach Anspruch 3 oder Anspruch 4,
wobei die Eingabe-Bestimmungselektrode (AD4) eine dritte Eingabe-Bestimmungselektrode (D34) und eine vierte Eingabe-Bestimmungselektrode (D44) aufweist, die den jeweiligen, einander benachbarten Musterbereichen (11) entsprechen, und
wobei die Falscheingabe-Bestimmungselektrode (AG4) zwischen der dritten Eingabe-Bestimmungselektrode (D34) und der vierten Eingabe-Bestimmungselektrode (D44) vorgesehen ist.

6. Bedienungsvorrichtung (101) nach einem der Anspruch 1 bis 5,
wobei zumindest zwei der Falscheingabe-Bestimmungselektroden (AG4) elektrisch miteinander verbunden sind.

7. Bedienungsvorrichtung (101) nach einem der Anspruch 1 bis 6,
wobei die Falscheingabe-Bestimmungselektroden (AG4) einige der Verdrahtungsbereiche (A5) bilden.

8. Fahrzeug-Bedienungsvorrichtung (500), die in einem Fahrzeug angebracht ist und zur Bedienung von verschiedenen Arten von elektronischen Geräten in dem Fahrzeug verwendet wird, wobei die Fahrzeug-Bedienungsvorrichtung (500) Folgendes aufweist:
die Bedienungsvorrichtung (101) nach einem der Ansprüche 1 bis 7;
eine Steuereinheit (511), die dazu ausgebildet ist, ein den Musterbereichen (11) in dem Bedienungsfeld (PN1) entsprechendes Befehlssignal auf der Basis eines von der Bedienungsvorrichtung (101) abgegebenen Signals zur Fahrzeugseite zu senden; und
ein Beleuchtungselement (SB6 oder SC6), das dazu ausgebildet ist, auf der Rückseite des Bedienungsfelds (PN1) angeordnet zu werden und die Musterbereiche (11) zu beleuchten.

## Revendications

1. Dispositif de mise en oeuvre (101) du type à capacité électrostatique comprenant :
un panneau de mise en oeuvre (PN1) dans lequel une pluralité de parties de motif transparent (11) destinées à être actionnées par un opérateur sont formées du côté d'une surface avant de celui-ci ;
un élément conducteur (12) comprenant une pluralité d'électrodes (A3) disposées du côté d'une surface arrière du panneau de mise en oeuvre (PN1) ; et
une partie de détection de capacité électrostatique (17) configurée pour détecter la capacité électrostatique entre l'électrode correspondante (A3) et une partie spécifique du corps (F9) comme un doigt de l'opérateur, dans lequel
l'élément conducteur (12) comprend une pluralité de parties de câblage (A5) connectées aux électrodes (A3),
les électrodes (A3) et les parties de câblage (A5) sont placées en des positions qui ne se chevauchent pas avec les parties de motif (11), lorsqu'elles sont vues en plan,
une électrode de détermination d'entrée (AD4) proche d'une partie prédéterminée parmi les parties de motif (11) et une électrode de détermination d'entrée incorrecte (AG4) disposée de façon à être adjacente à celle-ci et placée en une position dont la distance par rapport à la partie de motif prédéterminée (11) est supérieure à celle de l'électrode de détermination d'entrée (AD4) sont comprises dans les électrodes (A3), et
la partie de détection de capacité électrostatique (17) détermine la présence ou l'absence d'une opération réalisée sur la partie de motif prédéterminée (11), en fonction d'une valeur de capacité d'une variation de la capacité électrostatique de l'électrode de détermination d'entrée (AD4) et de l'électrode de détermination d'entrée incorrecte (AG4).

2. Dispositif de mise en oeuvre (101) selon la revendication 1, dans lequel :
la partie de détection de capacité électrostatique (17) comprend une unité de mémoire dans laquelle est stockée une première valeur de seuil de capacité électrostatique établie au préalable, et
la partie de détection de capacité électrostatique (17) compare entre elles la valeur de capacité provenant de l'électrode de détermination d'entrée incorrecte (AG4) et la première valeur de seuil.

3. Dispositif de mise en oeuvre (101) selon la revendication 2, dans lequel la partie de détection de capacité électrostatique (17) compare entre elles une deuxième valeur de seuil de capacité électrostatique établie au préalable et stockée dans l'unité de mémoire et la valeur de capacité provenant de l'électrode de détermination d'entrée (AD4).

4. Dispositif de mise en oeuvre (101) selon la revendication 3, dans lequel :
l'électrode de détermination d'entrée (AD4) comprend une première électrode de détermination d'entrée (D14) et une deuxième électrode de détermination d'entrée (D24) correspondant aux parties de motif respectives (11) situées à l'écart l'une de l'autre à une distance prédéterminée, et
l'électrode de détermination d'entrée incorrecte (AG4) est placée en une position adjacente à la première électrode de détermination d'entrée (D14) et est connectée électriquement à la deuxième électrode de détermination d'entrée (D24).

5. Dispositif de mise en oeuvre (101) selon l'une quelconque des revendications 3 et 4, dans lequel :
l'électrode de détermination d'entrée (AD4) comprend une troisième électrode de détermination d'entrée (D34) et une quatrième électrode de détermination d'entrée (D44) correspondant aux parties de motif respectives (11) adjacentes l'une à l'autre, et
l'électrode de détermination d'entrée incorrecte (AG4) est placée entre la troisième électrode de détermination d'entrée (D34) et la quatrième électrode de détermination d'entrée (D44).

6. Dispositif de mise en oeuvre (101) selon l'une quelconque des revendications 1 à 5, dans lequel au moins deux des électrodes de détermination d'entrée incorrecte (AG4) sont connectées électriquement l'une à l'autre.

7. Dispositif de mise oeuvre (101) selon l'une quelconque des revendications 1 à 6, dans lequel les électrodes de détermination d'entrée incorrecte (AG4) constituent une partie des parties de câblage (A5).

8. Dispositif de mise en oeuvre de véhicule (500) monté dans un véhicule et utilisé pour mettre en oeuvre diverses sortes d'appareils électroniques dans le véhicule, le dispositif de mise en oeuvre de véhicule (500) comprenant :
le dispositif de mise en oeuvre (101) selon l'une quelconque des revendications 1 à 7 ;
une unité de commande (511) configurée pour émettre, du côté du véhicule, un signal de commande correspondant aux parties de motif (11) dans le panneau de mise en oeuvre (PN1), basé sur une sortie de signal du dispositif de mise en oeuvre (101) ; et
un élément d'éclairage (SB6 ou SC6) configuré pour être placé du côté de la surface arrière du panneau de mise en oeuvre (PN1) et pour éclairer les parties de motif (11).
